# NEUE EUROPÄISCHE PATENTSCHRIFT

(11) **EP 2 036 425 B2**
(45) Veröffentlichungstag und Bekanntmachung des Hinweises auf die Entscheidung über den Einspruch: **29.10.2014**
(45) Hinweis auf die Patenterteilung: 08.12.2010
(21) Anmeldenummer: 08162984.2
(22) Anmeldetag: 26.08.2008
(51) Int. Cl.: A01F 12/24

(54) **Dreschkorbanordnung für einen Mähdrescher**
Concave assembly for a combine harvester
Agencement de panier de battage pour une moissonneuse-batteuse

(30) Priorität: 13.09.2007 DE 102007043667
(43) Veröffentlichungstag der Anmeldung: 18.03.2009
(73) Patentinhaber: Deere & Company, Moline, IL 61265 (US)
(72) Erfinder: Weichholdt, Dirk, 57200 Woelfling-lès-Sarreguemines (FR); Bischoff, Lutz, 66989 Nünschweiler (DE); Lauer, Fritz, 66894 Krähenberg (DE)
(74) Vertreter: Holst, Sönke

(56) Entgegenhaltungen:
- EP-A- 0 513 574
- EP-A1- 1 078 568
- EP-A1- 1 247 442
- DE-A1- 1 130 640
- DE-B- 1 130 641
- DE-U- 6 750 600
- FR-A- 1 479 557
- US-A- 1 334 910

## Beschreibung

Die Erfindung betrifft eine Dreschkorbanordnung für einen Mähdrescher nach dem Oberbegriff des Anspruchs 1.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Zum Dreschen dienen in der Regel Tangentialdrescheinrichtungen mit einem Dreschkorb und einer das Erntegut tangential fördernden Dreschtrommel oder das Erntegut axial fördernde Axialdrescheinrichtungen mit Axialdreschrotoren, die ebenfalls mit einem Dreschkorb zusammenwirken. Die Dreschkörbe setzen sich aus Bogen- und Querleisten zusammen, die zwischen sich Zwischenräume belassen. Der Dreschkorb umgibt die Dreschtrommel über einen Teil ihres Umfangs und schließt mit ihr einen Spalt ein, durch den das zu dreschende Erntegut gezwängt wird. Während das Erntegut durch den Spalt gefördert wird, scheiden sich Erntegutteile (das Korn) ab, fallen durch die Zwischenräume und werden einer Reinigungseinrichtung zugeführt. Aufgrund der Beschaffenheit des Ernteguts lassen sich Bestandteile mehr oder weniger gut herauslösen, so dass es sinnvoll ist, die Dreschkörbe dem jeweiligen Erntegut anpassen zu können.

Die FR 1 479 557 A zeigt einen Dreschkorb, bei dem der stromab liegende Bereich mit Querleisten ausgestattet ist, die zwischen sich Öffnungen zum Durchtritt der abgeschiedenen Erntegutteile bilden. Im Bereich des Einzugsspalts ist ein Freiraum gebildet, der zur wahlweisen Aufnahme eines Austauschteils dient, das je nach seiner Ausbildung eine glatte Platte für fragiles Erntegut, Querleisten für schwer dreschbares Erntegut oder Dreschleisten zum Entgrannen des Ernteguts enthält. Als nachteilig ist hierbei anzusehen, dass der Austausch des Austauschteils relativ zeitaufwändig ist, da zunächst die Befestigung des vorhandenen Austauschteils zu lösen, es dann zu entnehmen und durch ein anderes Austauschteil zu ersetzen und letzteres schließlich wieder zu befestigen ist.

Die DE 1 130 641 A beschreibt einen Dreschkorb mit einer vorderen Dreschkorbverlängerung mit U-förmigem Querschnitt, die um eine sich parallel zur Drehachse der Dreschtrommel erstreckende Achse schwenkbar ist, um sie zwischen einer aktiven Position und einer inaktiven Position bewegen zu können. Der mittlere Schenkel des U wirkt in der aktiven Position dreschend mit dem Erntegut zusammen, während die in der inaktiven Position um 180° gedrehte Dreschkorbverlängerung dann als Steinfalle dient. Als nachteilig ist hierbei anzusehen, dass der Übergang des Ernteguts vom Schrägförderer zum Dreschkorb bei inaktiver Dreschkorbverlängerung aufgrund der sich dann ergebenden, durch die nach unten verschwenkte Dreschkorbverlängerung bedingte Vertiefung problematisch ist.

Die als gattungsbildend angesehene DE 1 130 640 A beschreibt eine vordere Dreschkorbverlängerung für einen Mähdrescher, die um eine sich parallel zur Dreschtrommelachse erstreckende Achse schwenkbar angelenkt ist. In einer Position verlängert die Dreschkorbverlängerung den Dreschkorb nach vorn, und in einer nach unten verschwenkten, zweiten Position bildet eine glatte Führungsfläche eine vordere Überbrückung einer Steinfalle. Hier liegt bei der zweiten Position zwischen der Führungsfläche und dem Dreschkorb eine als Steinfalle dienende Lücke vor, während die Lücke bei aktiver Dreschkorbverlängerung vor der Dreschkorbverlängerung liegt. Dann bildet die Dreschkorbverlängerung eine vordere Kante, die den Erntegutfluss behindert.

### Aufgabe der Erfindung

Die der Erfindung zu Grunde liegende Aufgabe wird darin gesehen, einen Dreschkorb eingangs genannter Art für einen Mähdrescher bereitzustellen, bei dem ein von der Position des eingangsseitigen Bereichs unabhängiger, unproblematischer Erntegutfluss möglich ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Dreschkorbanordnung für einen Mähdrescher umfasst einen Dreschkorb und eine dem Dreschkorb eingangsseitig vorgelagerte Erntegutbearbeitungseinrichtung. Der Dreschkorb wirkt mit einer insbesondere im Tangentialbetrieb oder Axialbetrieb arbeitenden Dreschtrommel zusammen und umfasst in an sich bekannter Weise Dreschelemente und einen mit Öffnungen durchsetzten Belag, durch den Erntegutteile (Körner) passieren und zu einem Reinigungssystem gelangen können. Die Erntegutbearbeitungseinrichtung umfasst einen Körper mit daran befestigten Vorsprüngen. Der Körper ist um eine Schwenkachse schwenkbar gelagert, welche sich entlang der Eingangsseite des Dreschkorbs und somit parallel zur Drehachse der Dreschtrommel erstreckt. Auf diese Weise kann der Körper zwischen einer ersten Position, in der die Vorsprünge mit dem Erntegut zusammenwirken, und einer zweiten Position bewegt werden, in der nicht die Vorsprünge mit dem Erntegut zusammenwirken, sondern eine glatte Führungsfläche des Körpers. Die erste Position der Erntegutbearbeitungseinrichtung eignet sich für das Entgrannen von Erntegut, während die zweite Position für empfindliches Erntegut verwendbar ist. Der Körper umfasst zumindest im Bereich der Führungsfläche und der Vorsprünge jeweils eine übereinstimmende Form. Der Körper ist im Bereich der Führungsfläche und der Vorsprünge weiterhin jeweils gleich weit von der Schwenkachse entfernt. Dadurch wird ein von der Position der Erntegutbearbeitungseinrichtung unabhängiger Übergang des Ernteguts vom Schrägförderer zur Dreschtrommel möglich, da die mit dem Erntegut zusammenwirkenden Bereiche des Körpers in beiden erwähnten Positionen dieselbe Form (Querschnitt) und denselben Abstand von der Schwenkachse aufweisen.

Der Körper weist über seinen gesamten Umfang einen kreisförmigen Querschnitt auf, d. h. der Körper ist kreiszylindrisch geformt, oder er ist im Bereich der glatten Führungsfläche und der Vorsprünge kreiszylindrisch. In seinen übrigen Bereichen kann er dann abgeflacht oder ausgeschnitten sein.

Bei einer bevorzugten Ausführungsform der Erfindung umfasst die Erntegutbearbeitungseinrichtung in der Umfangsrichtung des Körpers an einer ersten Stelle eine erste Gruppe von Vorsprüngen und an einer zweiten Stelle eine zweite Gruppe von Vorsprüngen, die niedriger als die Vorsprünge der ersten Gruppe sind. Dadurch wird eine dritte Position der Erntegutbearbeitungseinrichtung ermöglicht, in der die zweite Gruppe von Vorsprüngen mit dem Erntegut zusammenwirkt und es sanfter als die erste Gruppe von Vorsprüngen bearbeitet.

### Ausführungsbeispiele

Anhand der Abbildungen werden zwei Ausführungsbeispiele der Erfindung erläutert. Es zeigt:
- Fig. 1: eine teilgeschnittene seitliche Ansicht eines Mähdreschers mit einer ersten Ausführungsform einer Dreschkorbanordnung,
- Fig. 2: eine vergrößerte seitliche Ansicht der Dreschkorbanordnung aus Figur 1 mit einer in der ersten Position befindlichen Erntegutbearbeitungseinrichtung,
- Fig. 3: eine seitliche Ansicht der Erntegutbearbeitungseinrichtung aus Figur 2 in ihrer zweiten Position,
- Fig. 4: eine seitliche Ansicht der Erntegutbearbeitungseinrichtung aus Figur 2 in ihrer dritten Position,
- Fig. 5: eine teilgeschnittene seitliche Ansicht eines Mähdreschers mit einer zweiten Ausführungsform einer Dreschkorbanordnung, und
- Fig. 6: eine Frontansicht der Dreschkorbanordnung aus Figur 5.

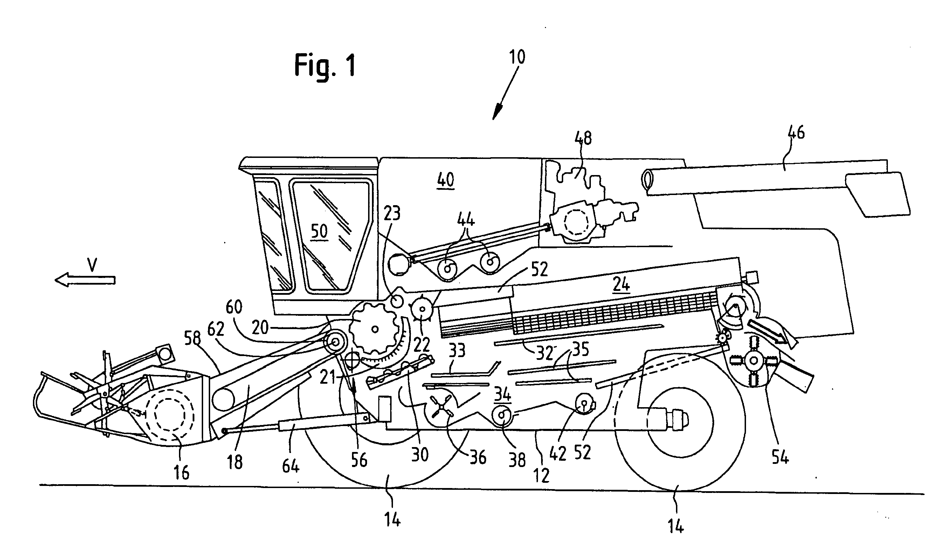

Die Figur 1 zeigt einen selbstfahrenden Mähdrescher 10 mit einem Rahmen 12, der sich über vordere, angetriebene und hintere lenkbare Räder 14 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. An den vorderen Endbereich des Mähdreschers 10 ist eine Erntegutbergungsvorrichtung in Form eines Schneidwerks 16 angeschlossen, um Erntegut von dem Feld zu ernten und es nach oben und hinten durch einen Schrägförderer 18 einem Dreschwerk zuzuführen. Das Dreschwerk umfasst eine quer angeordnete Dreschtrommel 20 und einen dieser zugeordneten Dreschkorb 21, denen das geerntete Gut zuerst zugeführt wird. Eine Abstreifrolle 23 und eine Wendetrommel 22 führen gemeinsam mit einem Zufuhrgehäuse das gedroschene Erntegut von der Dreschtrommel 20 und dem Dreschkorb 21 einem Axialabscheider 24 zu. Auch die Verwendung von Strohschüttlern als Abscheidemittel ist denkbar. Im Folgenden beziehen sich alle Richtungsangaben, wie vorn, hinten, ober- und unterhalb auf die Vorwärtsfahrtrichtung V des Mähdreschers 10.

Getreide und Spreu, die während des Dreschvorgangs abgeschieden werden, fallen auf wenigstens einen Förderboden 30, der sie einem Vorbereitungsboden 33 zuführt. Getreide und Spreu, die hingegen aus dem Axialabscheider 24 austreten, fallen auf einen Schüttelboden 32, der sie zur Weitergabe auf den Vorbereitungsboden 33 führt. Der Vorbereitungsboden 33 gibt das Getreide und die Spreu einer Reinigungseinrichtung 34 mit darin angeordneten Sieben 35 weiter, der ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu wird an der Rückseite der Reinigungseinrichtung 34 auf einen sich in einer Schwingbewegung befindlichen Schwingboden 52 ausgeworfen. Das gereinigte Getreide aus dem Korntank 40 kann durch ein Entladesystem mit Querschnecken 44 und einem Entladeförderer 46 entladen werden. Das vom Axialabscheider 24 an seiner Rückseite ausgeworfene Stroh wird gemeinsam mit der durch den Schwingboden 52 zugeführten Spreu durch einen Strohhäcksler 54 gehäckselt und auf dem Feld verteilt.

Die genannten Systeme werden mittels eines Verbrennungsmotors 48 angetrieben. Der Betrieb des Mähdreschers 10 wird von einer Bedienungsperson aus einer Fahrerkabine 50 heraus kontrolliert. Die verschiedenen Vorrichtungen zum Dreschen, Fördern, Reinigen und Abscheiden befinden sich innerhalb des Rahmens 12.

Der Schrägförderer 18 weist ein Gehäuse 58 auf, in dem eine obere Schrägfördererwalze 60 drehbar gelagert ist. Die horizontal und quer zur Fahrtrichtung verlaufende Drehachse 62 der oberen Schrägfördererwalze 60 entspricht gleichzeitig einer Schwenkachse, um die der Schrägförderer 18 am Rahmen 12 des Mähdreschers 10 schwenkbar angelenkt ist. Diese Schwenkbewegung wird durch Hydraulikzylinder 64 bewerkstelligt. Der Dreschkorb 21 an sich ist von konventioneller Konstruktion und umfasst zwei bogenförmige, an den Radius der Dreschtrommel 20 angepasste Seitenwangen 66, zwischen denen sich Dreschleisten 68 erstrecken. In Umfangsrichtung der Dreschtrommel 20 umfasst der Dreschkorb 21 weitere, in den Figuren nicht erkennbare Bogenleisten.

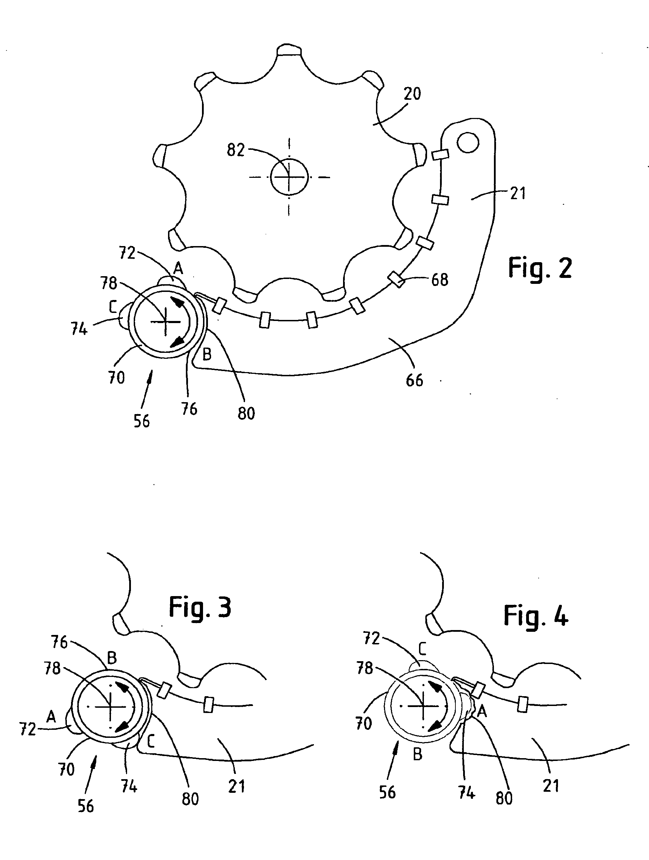

Dem Dreschkorb 21 ist bezüglich der Flussrichtung des Ernteguts eine Erntegutbearbeitungseinrichtung 56 vorgeordnet, die in den Figuren 2 bis 4 in vergrößerter Darstellung wiedergegeben wird. Die Erntegutbearbeitungseinrichtung 56 umfasst einen kreiszylinderförmigen Körper 70 mit einer ersten Gruppe von Vorsprüngen 72, die sich in axialer Richtung des Körpers 70 erstrecken, einer zweiten Gruppe von Vorsprüngen 74, die sich an einer von der ersten Gruppe von Vorsprüngen 72 in Umfangsrichtung des Körpers 70 beabstandeten Stelle in axialer Richtung des Körpers 70 erstrecken, und einer glatten Führungsfläche 76, die sich an einer von der ersten Gruppe von Vorsprüngen 72 und von der zweiten Gruppe von Vorsprüngen 74 in Umfangsrichtung des Körpers 70 beabstandeten Stelle in axialer Richtung des Körpers 70 erstreckt. Die Vorsprünge 72 der ersten Gruppe sind höher als die Vorsprünge 74 der zweiten Gruppe. Beide Gruppen von Vorsprüngen 72, 74 setzen sich aus an sich bekannten Entgrannerleisten mit Rippen und dazwischen angeordneten Aussparungen zusammen.

Der Körper 70 erstreckt sich in Querrichtung des Dreschkorbs 21. Er ist um eine - mit seiner Symmetrie- und Mittelachse übereinstimmende - Schwenkachse 78, die sich parallel zur Drehachse 82 der Dreschtrommel 20 erstreckt, zwischen einer ersten Position A, in der sich die Vorsprünge 72 der ersten Gruppe an seiner Oberseite befinden und mit dem Erntegut zusammenwirken (s. Figur 2), einer zweiten Position B, in der sich die glatte Führungsfläche 76 an seiner Oberseite befinden (s. Figur 3) und mit dem Erntegut zusammenwirken, und einer dritten Position C (s. Figur 4), in der sich die Vorsprünge 74 der zweiten Gruppe an seiner Oberseite befinden und mit dem Erntegut zusammenwirken, drehbeweglich. In den erwähnten Positionen A, B und C wird der Körper 70 vorzugsweise arretiert. Die Drehbewegung kann mittels eines geeigneten Aktors oder manuell durch die Bedienungsperson vorgenommen werden, wobei geeignete Übertragungsmittel vorgesehen sein können, mit denen die Drehbewegung manuell oder fremdkraftbetätigt aus der Fahrerkabine 50 bewerkstelligt werden kann. Die Erntegutbearbeitungseinrichtung 56 ist in einer entsprechenden Aussparung 80 der Seitenwangen 66 angeordnet.

Eine Verstellung der Erntegutbearbeitungseinrichtung 56 zwischen den drei Positionen A, B und C ist unproblematisch möglich, so dass eine geeignete Bearbeitung des Ernteguts unschwer erzielbar ist. Die erste Gruppe 72 ermöglicht ein Entgrannen von zu entgrannendem Erntegut, was auch in einer schonenderen Weise mit der zweiten Gruppe 74 möglich ist. Aufgrund der Kreiszylinderform des Körpers 70 ist ein glatter Übergang des Ernteguts vom Schrägförderer 18 in die aus Dreschkorb 21 und Dreschtrommel 20 aufgebaute Dreschanordnung möglich, insbesondere auch in der zweiten Position B. In allen drei Positionen A, B und C wird das Erntegut weich und schonend durch den Körper 70 zum Dreschkorb geleitet.

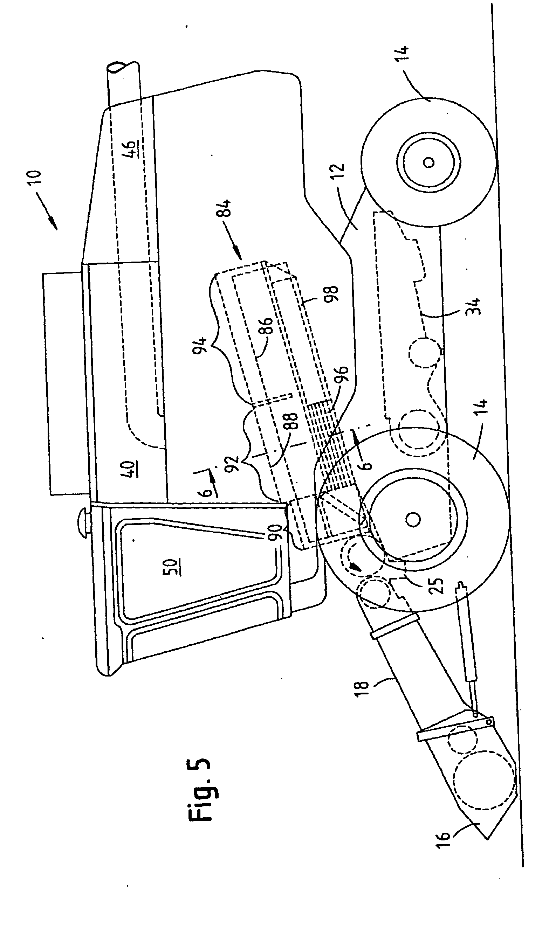

Die Figur 5 zeigt eine Seitenansicht eines anderen Mähdreschers 10', bei dem Elemente, die mit denen des Mähdreschers 10 übereinstimmen, mit denselben Bezugszeichen ausgezeichnet sind. Als wesentlicher Unterschied ist anzusehen, dass der Mähdrescher 10' nach Figur 5 eine Axialdresch- und Trenneinrichtung 84 aufweist, die das Erntegut drischt und trennt. Die Axialdresch- und Trenneinrichtung 84 umfasst einen in Drehung versetzbaren Rotor 86, welcher radial durch ein Gehäuse 88 eingeschlossen ist, das gemeinsam mit dem Rotor 86 einen Einlassbereich 90, einen Dreschbereich 92 und einen Trennbereich 94 definiert. Der Rotor 86 umfasst eine hohle zylindrische Trommel mit einer Vielzahl an Gutbearbeitungselementen, die in das Erntegut eingreifen und es im Gehäuse 88 herumdrehen. Der Boden des Gehäuses 88 umfasst einen Dreschkorb 96 unter dem Dreschbereich 92 und einen Trennrost 98 unter dem Trennbereich 94.

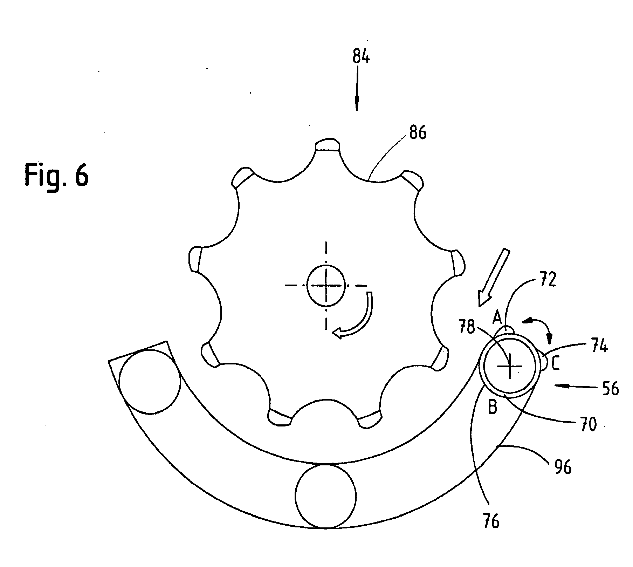

Die Figur 6 zeigt einen vertikalen Schnitt durch die Axialdresch- und Trenneinrichtung 84 im Dreschbereich 92 entlang der Linie 6-6 der Figur 5. Eingangsseitig (bezüglich der Drehrichtung des Rotors 86 stromauf) ist dem Dreschkorb 96 ebenfalls eine Erntegutbearbeitungseinrichtung 56 vorgelagert, die sich in axialer Richtung des Rotors 86 über den gesamten Dreschbereich 92 erstreckt und in ihrem Aufbau, dem Mechanismus zur Verstellung und der Funktion der Ausführungsform nach Figur 2 entspricht. Die Erntegutbearbeitungseinrichtung 56 umfasst demnach einen kreiszylindrischen Körper 70 mit einer sich parallel zur Drehachse des Rotors 86 erstreckenden (Symmetrie-) Achse 78, um die der Körper 70 zwischen einer ersten Position A, in der eine erste Gruppe von Vorsprüngen 72 mit dem Erntegut zusammenwirken, einer zweiten Position B, in der das Erntegut mit einer glatten Führungsfläche 76 zusammenwirkt, und einer dritten Position C verdrehbar ist, in welcher eine zweite Gruppe von Vorsprüngen 74, die niedriger als die Vorsprünge 72 sind, mit dem Erntegut zusammenwirkt, um es zu entgrannen.

## Patentansprüche

1. Dreschkorbanordnung für einen Mähdrescher (10, 10'), mit einem Dreschkorb (21, 96) und einer dem Dreschkorb (21, 96) eingangsseitig vorgelagerten Erntegutbearbeitungseinrichtung (56), die einen Körper (70) mit an der Oberfläche des Körpers (70) angeordneten Vorsprüngen (72, 74) umfasst, wobei der Körper (70) um eine sich entlang der Eingangsseite des Dreschkorbs (21, 96) erstreckende Schwenkachse (78) zwischen einer ersten Position (A), in der die Vorsprünge (72) mit Erntegut zusammenwirken, und einer zweiten Position (B) bewegbar ist, in der eine glatte Führungsfläche (76) mit dem Erntegut zusammenwirkt, und in beiden Positionen (A, B) arretierbar ist, **dadurch gekennzeichnet, dass** der Körper (70) zumindest in dem Bereich der glatten Führungsfläche (76) und der Vorsprünge (72) eine übereinstimmende Form aufweist, dass der Körper (70) im Bereich der glatten Führungsfläche (76) und der Vorsprünge (72) gleich weit von der Schwenkachse (78) beabstandet ist, und dass der Körper (70) in dem Bereich der glatten Führungsfläche (76) und der Vorsprünge (72) kreistylinderförmig ist.

2. Dreschkorbanordnung nach Anspruch 1, **dadurch gekennzeichnet, dass** der Körper (70) über seinen ganzen Umfang einen kreisförmigen Querschnitt aufweist.

3. Dreschkorbanordnung nach einem der Ansprüche 1 oder 2, **dadurch gekennzeichnet, dass** die Erntegutbearbeitungseinrichtung (56) bezüglich der Umfangsrichtung des Körpers (70) an einer ersten Stelle eine erste Gruppe von Vorsprüngen (72) und an einer zweiten Stelle eine zweite Gruppe (74) von Vorsprüngen umfasst, die niedriger als die Vorsprünge der ersten Gruppe (72) sind.

4. Mähdrescher (10, 10') mit einer Dreschkorbanordnung nach einem der Ansprüche 1 bis 3, welche mit einer tangential fördernden Dreschtrommel (20) oder einem axial fördernden Axialdreschrotor (86) zusammenwirkt.

## Claims

1. A concave arrangement for a combine harvester (10, 10'), with a concave (21, 96) and a crop processing device (56) which is mounted upstream on the inlet side of the concave (21, 96) and comprises a body (70) with projections (72, 74) arranged on the surface of the body (70), wherein the body (70) is movable about a pivot axis (78), which extends along the inlet side of the concave (21, 96), between a first position (A), in which the projections (72) interact with crop, and a second position (B), in which a smooth guide surface (76) interacts with the crop, and can be arrested in both positions (A, B), **characterized in that** the body (70) has a corresponding shape at least in the region of the smooth guide surface (76) and the projections (72), **in that** the body (70) is spaced apart in the region of the smooth guide surface (76) and the projections (72) at an equal distance from the pivot axis (78), and that the body (70) is circle cylinder shaped in the region of the smooth guide surface (76) and the projections (72).

2. A concave arrangement according to claim 1, **characterized in that** the body (70) has a circle shaped cross section over its entire periphery.

3. A concave arrangement according to either of Claims 1 and 2, **characterized in that**, at a first location with respect to the peripheral direction of the body (70), the crop processing device (56) comprises a first group of projections (72) and, at a second location, a second group (74) of projections which are lower than the projections of the first group (72).

4. Combine harvester (10, 10') with a concave arrangement according to one of Claims 1 to 3 which interacts with a tangentially conveying threshing drum (20) or an axially conveying axial threshing rotor (86).

## Revendications

1. Agencement de contre-batteur pour une moissonneuse-batteuse (10, 10'), comprenant un contre-batteur (21, 96) et un dispositif de traitement de matière récoltée (56) monté en aval du contre-batteur (21, 96), côté entrée, lequel dispositif comporte un corps (70) avec des saillies (72, 74) disposées sur la surface du corps (70), le corps (70) pouvant être déplacé autour d'un axe de pivotement (78) s'étendant le long du côté entrée du contre-batteur (21, 96) entre une première position (A), dans laquelle les saillies (72) coopèrent avec de la matière récoltée, et une seconde position (B), dans laquelle une surface de guidage (76) lisse coopère avec la matière récoltée, et peut être arrêté dans les deux positions (A, B), **caractérisé en ce que** le corps (70) présente une forme concordante au moins dans la zone de la surface de guidage (76) lisse et des saillies (72), **en ce que** le corps (70) est espacé de la même distance de l'axe de pivotement (78) dans la zone de la surface de guidage (76) lisse et des saillies (72), et **en ce que** le corps (70) est modelé circulaire cylindrique dans la zone de la surface de guidage (76) lisse et des saillies (72).

2. Agencement de contre-batteur selon la revendication 1, **caractérisé en ce que** le corps (70) présente une section transversale circulaire sur toute sa périphérie.

3. Agencement de contre-batteur selon l'une quelconque des revendications précédentes 1 ou 2, **caractérisé en ce que** le dispositif de traitement de matière récoltée (56) comporte par rapport au sens périphérique du corps (70) en un premier endroit un premier groupe de saillies (72) et en un second endroit un second groupe (74) de saillies, qui sont plus basses que les saillies du premier groupe (72).

4. Moissonneuse-batteuse (10, 10') dotée d'un agencement de contre-batteur selon l'une quelconque des revendications 1 à 3, lequel coopère avec un tambour de battage (20) transportant dans le sens tangentiel ou un rotor de battage axial (86) transportant axialement.
